# EUROPÄISCHE PATENTANMELDUNG

(11) **EP 2 103 671 A1**
(43) Veröffentlichungstag der Anmeldung: **23.09.2009**
(21) Anmeldenummer: 09002712.9
(22) Anmeldetag: 26.02.2009
(51) Int. Cl.: C10L 11/04, C10L 5/44

(54) **Anzünder für feste Brennstoffe**

(30) Priorität: 20.03.2008 DE 102008015338
(71) Anmelder: Carl Warrlich GmbH, 99830 Treffurt (DE)
(72) Erfinder: Warrlich, Karl-Heinz, 99830 Treffurt (DE); Häßler, Margarethe, geb. Warrlich, 99830 Treffurt (DE); Häßler, Alexander, 99830 Treffurt (DE)
(74) Vertreter: Lichti, Heiner

(57) **Zusammenfassung**

Ein Anzünder für feste Brennstoffe, insbesondere Holz-, Kohle- oder Holzkohleanzünder, mit einem Presskörper aus brennbaren Pflanzenfasern, der mit einem zumindest im Verarbeitungszustand flüssigen, brennbaren Tränkmittel getränkt oder beschichtet ist, zeichnet sich dadurch aus, dass das Tränkmittel aus natürlichen Fettsäuren - gesättigt oder ungesättigt - und deren veresterten Produkten auf pflanzlicher Basis besteht. Wenn das Tränkmittel einen zu hohen Flammenpunkt aufweist, sind Paraffine mit maximal 9,9 Massenprozent zugemischt.

## Beschreibung

Die Erfindung betrifft einen Anzünder für feste Brennstoffe, insbesondere Holz-, Kohle- oder Holzkahleanzünder, mit einem Preßkörper aus brennbaren Pflanzenfasern, der mit einem zumindest im Verarbeitungszustand flüssigen, brennbaren Tränkmittel aus natürlichen Fettsäuren und Fettsäureestern getränkt oder beschichtet ist.

Anzünder der vorgenannten Art dienen als Hilfsmittel zum Anzünden fester Brennstoffe, insbesondere als Grill- und Kaminanzünder. Sie müssen vornehmlich zwei Aufgaben erfüllen: zum einen sollen sie mittels einer Flamme (Feuerzeug oder Streichholz) leicht entzündbar sein, ohne aber zur Selbstentzündung zu neigen, zum anderen sollen sie die für den festen Brennstoff notwendige Flammtemperatur über einen gewissen Zeitraum aufrechterhalten, um eine für den Fortgang des Verbrennungsvorgangs ausreichende Masse des Brennstoffs zu entzünden. Die Verbrennungswärme des Anzünders, insbesondere des Preßkörpers muß also entsprechend hoch sein.

In der Praxis haben sich insbesondere solche Anzünder durchgesetzt, die aus einem Preßkörper aus brennbaren Naturfasern, insbesondere Lignozellulosefasern bestehen. Hierzu werden in der Regel Holzspäne mit einem möglichst hohen Harzanteil verwendet, die durch Pressen bei erhöhter Temperatur zu Platten geformt werden. Die Preßplatten werden dann mit Brechkerben versehen und entweder als kleinere Platten oder in Stangen- bzw. in Würfelform zugeschnitten. Als Anzündmittel dienen synthetische Kohlenwasserstoffe in Form von Paraffin, mit dem die Preßplatte oder die konfektionierte Ware getränkt oder beschichtet ist.

Die bei in der Praxis bekannten Anzündern ausschließlich verwendeten Paraffine werden entweder aus Rückständen der Mineralöldestillation (Gatsche) oder bei hohem Reinheitsgrad auf synthetischem Wege hergestellt. In beiden Fällen ist der Aufwand an technischer Installation und der Energieverbrauch ganz erheblich. Bei der Gewinnung aus Mineralöl werden zudem die begrenzten Ressourcen belastet. Die bloße Verwendung von Paraffinen gilt zudem als ökologisch bedenklich.

Es ist deshalb bereits ein Tränkmittel vorgeschlagen worden (DE-A1-196 28 827), das aus einem geringen Anteil leicht entflammbarer Kohlenwasserstoffe und einem überwiegenden Anteil Pflanzenöl besteht, wobei 10 bis 40 Mass% Aliphate und 60 bis 90 Mass% Pflanzenöl vorgesehen sind und das Pflanzenöl einen Flammpunkt aufweist, der zwischen demjenigen der Kohlenwasserstoffs und dem des Preßkörpers liegt, und vornehmlich zur Aufrechterhaltung der Verbrennung des Preßkörpers dient, wobei die Kohlenwasserstoffe Aliphate mit C₈ bis C₃₀ sind.

Diese bekannten Tränkmittel sind vergleichsweise teuer, da der Preis für Pflanzenöle, insbesondere Rapsöl, aufgrund der gesetzlich erzwungenen, zunehmenden Verarbeitung zu Biokraftstoffen ständig gestiegen ist. Die ökologische Bilanz dieses bekannten Tränkmittels ist aufgrund des vergleichsweise hohen Gehalts an Aliphaten ungünstig. Hinzu kommt, dass Aliphate mit größer C₁₉ eine ungeeignet hohe Viskosität aufweisen. Es ist ferner bei einem Anzünder mit einem sehr speziellen Trägermaterial, nämlich stückig geschnittenen Teilen der Schale der Kokosnuß mit Faserschnitt bekannt (DE 20 2005 015 446 U1), die Faserschicht entweder mit einem paraffinhaltigen Öl oder Wachs zu tränken oder aber ein Öl aus Rapssäuremethylester, Fettsäure-Ethyl-Hexyl, Kokosöl oder andren brennbaren Flüssigkeiten mit ähnlichem Charakter einzusetzen.

Ferner ist es bekannt (DD 35 739), als Tränkmittel bei der Fettspaltung entstehende Fettalkohole und höhermolekulare Fettsäureester, die mit Paraffingatsch versetzt werden, einzusetzen. Die Fettalkohole und Fettsäureester weisen für den bestimmungsgemäßen Gebrauch bei Anzündern einen zu hohen Flammenpunkt auf. Dies gilt auch im Gemisch mit Paraffingatsch, denn letzterer reicht über einen Bereich von C₁₆ bis C₂₈ mit einem überwiegenden Anteil größer C₁₉ und weist eine teigig bis feste Konsistenz auf (Römpps Chemie Lexikon).

Die bekannten Anzünder haben den Nachteil, dass bei Zusatz nur von paraffinhaltigem Öl (DE 20 2005 014 446 U1) das Tränkmittel zu schnell abbrennt, ohne das Trägermaterial am Brennen zu halten, und bei Zusatz von Fettsäureestern (DE 20 2005 014 446 U1, DD 35 739) oder solchen in Verbindung mit Paraffingatsch der Flammpunkt zu hoch ist, um den Anzünder mit den üblichen Zündungshilfsmitteln schnell zu entzünden.

Der Erfindung liegt die Aufgabe zugrunde, einen Anzünder gemäß dem Oberbegriff des Anspruchs 1 dahingehend weiterzuentwickeln, dass ein den Vorschriften für die Bezeichnung als ökologisch genügendes und dennoch preisgünstiges Produkt erhalten wird.

Diese Aufgabe wird erfindungsgemäß dadurch gelöst, dass das Tränkmittel aus als Beiprodukt bei der Verarbeitung von Pflanzenölen zu Biokraftstoffen anfallende Fettsäuren - gesättigt oder ungesättigt - und deren veresterten Produkten auf pflanzlicher Basis besteht und diesen Paraffine mit C₉ bis C₁₈ mit maximal 9,9 Massenprozent zugemischt sind.

Natürliche Fettsäuren und deren veresterte Produkte fallen als Beiprodukte bei der Verarbeitung von Pflanzenölen, insbesondere Rapsöl, zu Biokraftstoffen, insbesondere Biodiesel, an. Diese preiswerten und natürlichen Beiprodukte werden erfindungsgemäß als Tränkmittel für den gleichfalls aus natürlichen Fasern bestehenden Presskörper genutzt. Die vorgenannten Tränkmittel weisen einen zu hohen Flammpunkt auf. Es ist deshalb weiterhin vorgesehen, Paraffine mit einem Kohlenstoffgehalt von maximal C₉ bis C₁₈ mit maximal 9,9 Massenprozent zuzumischen.

Bei den Paraffinen kann es sich um n-Paraffine, Isoparaffine oder Gemische aus diesen oder Gemische mit Cycloparaffinen mit einem Aromatengehalt ≤ 0,05% handeln.

Als Ausgangsprodukte für das Tränkmittel kommt vorrangig Rapsöl, aber auch Sojaöl, Senföl oder Palmkernöl in Frage, aus denen die natürlichen Fettsäuren gewonnen werden.

Der Preßkörper besteht vorteilhafterweise aus Fasern oder Spänen mit einem fasereigenen oder anderen natürlichen Bindemittel. Er kann aus Lignozellulose-, Jutefasern oder Getreidestroh gepresst sein.

## Patentansprüche

1. Anzünder für feste Brennstoffe, insbesondere Holz-, Kohle- oder Holzkohleanzünder, mit einem Preßkörper aus brennbaren Pflanzenfasern, der mit einem zumindest im Verarbeitungszustand flüssigen, brennbaren Tränkmittel aus natürlichen Fettsäuren und Fettsäureestern getränkt oder beschichtet ist, **dadurch gekennzeichnet, dass** das Tränkmittel aus als Beiprodukt bei der Verarbeitung von Pflanzenölen zu Biokraftstoffen anfallende Fettsäuren - gesättigt oder ungesättigt - und deren veresterten Produkten auf pflanzlicher Basis besteht und diesen Paraffine mit C₉ bis C₁₈ mit maximal 9,9 Massenprozent zugemischt sind.

2. Anzünder nach Anspruch 1, **dadurch gekennzeichnet, dass** die Paraffine n-Paraffine, Isoparaffine oder Gemische aus diesen oder Gemische mit Cycloparaffinen mit einem Aromatengehalt ≤ 0,05% sind.

3. Anzünder nach Anspruch 1 oder 2, **dadurch gekennzeichnet, dass** das Tränkmittel einen Flammpunkt aufweist, der zwischen demjenigen der zugemischten Paraffine und des Preßkörpers liegt, und vornehmlich zur Aufrechterhaltung der Verbrennung des Preßkörpers dient.

4. Anzünder nach einem der Ansprüche 1 bis 3, **dadurch gekennzeichnet, dass** der Preßkörper aus Fasern oder Spänen und einem fasereigenen oder einem anderen natürlichen Bindemittel besteht.

5. Anzünder nach einem der Ansprüche 1 bis 4, **dadurch gekennzeichnet, dass** der Preßkörper aus Lignozellulose-,Jutefasern oder Getreidestroh besteht.
